# EUROPEAN PATENT SPECIFICATION

(11) **EP 3 252 879 B1**
(45) Date of publication and mention of the grant of the patent: **26.08.2020**
(21) Application number: 16172315.0
(22) Date of filing: 31.05.2016
(51) Int. Cl.: H01R 13/627, H02K 11/22, H01R 13/66, H01R 13/639, B60L 53/16, B60L 53/18

(54) **ACTUATOR MODULE FOR CHARGE INLETS**
AKTUATORMODUL FÜR LADUNGSEINGÄNGE
MODULE ACTIONNEUR CONÇU POUR CHARGER DES ENTRÉES

(43) Date of publication of application: 06.12.2017
(73) Proprietor: TE Connectivity Germany GmbH, 64625 Bensheim (DE)
(72) Inventor: Heiss, Dominik, 69234 Dielheim (DE); Wittrock, Frank, 69198 Schriesheim (DE); Weyrauch, Dirk, 64653 Lorsch (DE)
(74) Representative: Grünecker Patent- und Rechtsanwälte PartG mbB

(56) References cited:
- EP-A2- 2 293 391
- WO-A1-2014/092020
- US-A1- 2014 210 410

## Description

The invention relates to an actuator module for locking an electric connection such as a charge inlet, in particular, of e-mobility vehicles, the actuator module comprising a locking member which is movable from an unlocked position to a locked position along a direction of movement, a drive unit for moving the locking member from the unlocked to the locked position, and a position detection unit for determining the position of the locking member. The invention further relates to a charge inlet comprising an inventive actuator module.

Electric connections with a high voltage applied or high currents to be transmitted are preferentially locked, i.e. secured against disconnecting, as long as the height voltage is applied or the high current flows. With such measures, arcing and/or damage of the plug connection components may be avoided.

E-mobility vehicles, for instance electric or hybrid cars, require an electric connection during charging, which electric connection is preferentially only established if a plug connector of the charging station is securely and completely plugged into a charge inlet of the e- mobility vehicle.

Also, after electrically disconnecting the charge inlet from the plug connector of the charging station, the locking mechanism, which locks the plug connector and the charge inlet mechanically, needs to be reliably triggered to unlock the mechanical connection between the charge inlet and the plug connector.

It is furthermore desired that the status of the locking mechanism is reliably detected for secure charging of the e-mobility vehicle without the risk of arcing and/or damage of the plug connection components and for reliably allowing to mechanically disconnect the charge inlet from the plug connector of the charging station after electrically disconnecting the plug connection components.

E-mobility vehicles apply actuators in one of the charging components, i.e. the charge inlet or the plug connector of the charging station. Those actuators comprise a locking member which is movable from an unlocking position to a locking position.

In the unlocking position of the locking member, the plug connection components, i.e. the charge inlet and the plug connector of the charging station, may be removeably plugged to each other or disconnected.

In the locking position of the locking member, a positive lock between the plug connection components is established such that the plug connection components, i.e. the charge inlet and the plug connector of the charging station, may not be disconnected or unplugged. The locking position of the locking member may furthermore prevent the plug connection components to be mechanically plugged into each other. Actuator modules for locking an electric connection are known from the art. In document EP 2 293 391 A2, a device for locking a plug in a socket is disclosed, wherein an auxiliary energy storage means is comprised, which is adapted to store enough energy to actuate a locking member from a locked state into an unlocked state. In US 2014/0210410A1, a locking apparatus for electric charging cable or flaps is disclosed, wherein a charging cable plug may be separated from the charging cable socket by an overload means. Also WO2014/092020A1 discloses an actuator having a pin detection device with a plurality of switches for detecting positions of a locking pin.

One object of the present invention is therefore to provide an actuator module which allows for reliably detecting the status of the actuator module, especially the status of the locking member.

Furthermore, another object of the present invention is to minimize or avoid the mechanical influence on the actuator module by detection of the status of the actuator module, i.e. the position of the locking member.

Another object of the present invention is to optimize the installation space and increase the lifetime of the included components.

The inventive actuator module of the aforementioned type solves the above problem in that it comprises the subject-matter of independent claim 1.

The inventive charge inlet solves the above problems by comprising an inventive actuator module.

The actuator module is preferentially applied in e-mobility vehicles where high voltages and/or currents may occur. The actuator module itself may be located in the e-mobility vehicle, i.e. in the charge inlet or in a plug connector of the vehicles' charging means, but may also be located in the charging means which are stationary, i.e. the charging infrastructure.

In general, the inventive actuator module may be applied in any application where a secured and reliable electrical connection needs to be secured and prevented from unintentional disconnection.

The actuator module is to be understood as a separate and replaceable unit which may be easily mounted or replaced.

Preferentially, the locking member is movable along a direction which is essentially perpendicular to the plug-in direction along which the plug connection components are plugged together. The drive unit moving the locking member from the unlocked position into the locked position may move the locking member such that it extends away from an actuator housing, whereas in the unlocked position, the locking member is entirely received by the actuator housing.

The at least one optical sensor operates in a contactless manner, i.e. the movement of the locking member is not influenced by determination of the position of the locking member. The detection zone of the at least one optical sensor may be understood as a two-dimensional area or a three-dimensional volume in which the presence or the absence of an object may be detected. In more complicated optical sensors, the exact movement of an optically detected object may be determined.

The trigger member is to be understood as an element which is movable into the detection zone of the at least one optical sensor, wherein the locking member itself may act as the trigger member.

Depending on the desired geometry of the actuator module, the trigger member, being located in the detection zone in at least one of the unlocked position and the locked position of the locking member, may be moved into the detection zone of the at least one optical sensor if the locking member is moved from the locked position into the unlocked position, whereas it is also conceivable that the trigger member is moved into the detection zone if the locking member is moved from the unlocked position into the locked position. At least in one of those two positions, the trigger member is located in the detection zone of the at least one optical sensor.

The locking member may preferentially be embodied as a longitudinal structure with a longitudinal extension being larger than the extension in each of the two directions oriented essentially perpendicular to the longitudinal direction of the locking member. The longitudinal locking member may have a circular cross-section or may be embodied with a different number of edges, i.e. as a triangular, a rectangular or a polygonal shape with n-edges.

However, the locking member may also be embodied as a cuboid, a cube or a circle.

In contrast to optical sensors working in reflection, a light barrier has the advantage that nearly any object located in the detection zone of the light barrier may be detected.

Such an arrangement of the at least two optical sensors and the trigger member being located in the detection zones of the at least two optical sensors has the advantage that the corresponding position, i.e. the unlocked position or the locked position, is only detected if the trigger member is located in both detection zones of the at least two optical sensors. An insufficient movement of the trigger member, which may place the trigger member in only one detection zone of the at least two optical sensors will therefore not be interpreted as reaching the unlocked position or the locked position.

A trigger member embodied to be located in the detection zones of the at least two optical sensors at the same time allows to differentiate between four different states, i.e. positions of the locking member.

The use of two optical sensors, in which both may be binary optical sensors having an on-state and an off-state, yields the advantage that theoretically four different states may be expressed, i.e. detected, by the two optical sensors.

In the following, different embodiments of the present invention will be presented and described, wherein each of the presented embodiments is advantageous on its own. Technical features of the following embodiments may be arbitrarily combined with each other or may be omitted if not relevant for the technical effect achieved by the invention.

The light barrier may, in particular, be a fork light barrier, wherein the detection zone of such a fork light barrier is between fork arms. The fork arms of a fork light barrier furthermore yield the advantage of a reduced influence of ambient radiation which may falsify the detection of an object in the detection zone.

It is preferred if more states of the actuator can be monitored, i.e. not only the locked and the unlocked state of the actuator module.

Especially in case of a failure of the locking mechanism, it is desired to detect such a status of an incomplete unlocking of the locking mechanism, which may allow for a new unlocking attempt of the locking mechanism.

The at least two optical sensors may be of the same type or may be of a different type. Preferably, the at least two optical sensors are embodied as fork light barriers.

In a third embodiment of the inventive actuator module, the at least two optical sensors are arranged one behind the other along the direction of movement of the locking member. Such an arrangement of the at least two optical sensors has the advantage that the position of the locking member is resolved in the direction of movement of the locking member. Furthermore, such an arrangement renders the possibility of detecting a first position of the locking member by the first optical sensor of the at least two optical sensors, which position is different from a second position detected by a second of the at least two optical sensors.

In another embodiment of the inventive actuator module, the trigger member is monolithically connected to the locking member. Such a monolithically embodied trigger member reduces the number and cost of the production steps of the locking member.

The trigger member may therefore be a part of the locking member which extends away from the latter, movements of the trigger member are therefore directly coupled to movements of the locking member.

In a further embodiment of the actuator module, the trigger member extends from the locking member essentially perpendicular to the direction of movement of the locking member.

The trigger member may extend away from the locking member in one portion or may comprise several extensions which are separated from each other, i.e. forming a structure similar to a comb. The trigger member may extend only on one side of the locking member or may be embodied symmetrically to the direction of movement of the locking member.

The optical sensors may be arranged within the actuator module such that the extending trigger member may be moved into the detection zone of at least one optical sensor.

In another embodiment of the inventive actuator module, the trigger member has a flat shape. A flat shape is advantageous for being moved into the detection zone of the optical sensors. A flat-shaped trigger member is to be understood to be shaped as a flag, as a plate or as a fin.

The flat-shaped trigger member may preferentially extend along the direction of movement of the locking member, wherein the extension of the flat-shaped trigger member along a circumferential direction of the locking member may be the smallest extension of the flat-shaped trigger member.

The circumferential direction is to be understood as a direction essentially perpendicular to the direction of movement of the locking member and essentially perpendicular to a radial direction, which radial direction is essentially perpendicular to the direction of movement of the locking member and spans a two-dimensional plane.

In another embodiment of the inventive actuator module, the trigger member is solely located in one of the detection zones of the at least two optical sensors in an intermediate position of the locking member, which intermediate position of the locking member is located between the unlocked position and the locked position of the locking member.

The advantage of an intermediate position detectable by the position detection unit is the possibility of a clear distinction between a final state, i.e. the locked or unlocked state of the actuator module, and a state of the actuator module which does not correspond to any of the final states. In solutions of the art, such a status is binary, i.e. the locking member is either detected to be locked or unlocked.

In another embodiment of the inventive actuator module, the position detection unit comprises a signal output line for providing a position signal, which position signal corresponds to the position of the locking member. The serial output line has the advantage of providing the status of the actuator module, i.e. the position of the locking member via a given signal line in a predetermined format. The position signal provided by the signal output line may be provided as an analog or digital signal, i.e. it may be provided as a continuous voltage or as a coded signal.

The position signal may especially be one out of three discrete values corresponding to the unlocked position, the intermediate position or the locked position.

In yet another embodiment of the inventive actuator module, the position detection unit provides an analog signal via the signal output line if the locking member is in the unlocked position, a lock signal if the locking member is in the locked position and an intermediate signal if the locking member is positioned between the locked position and the unlocked position. The unlocked signal, the lock signal and the intermediate signal may correspond to three discrete values, e.g. voltage coded values provided via the signal output line, which signals may be accessible from outside the actuator module.

In another embodiment of the inventive actuator module, the position detection unit and the at least one optical sensor are located on one circuit board. Placing the position detection unit and the at least one optical sensor on a circuit board has the advantage that alignment of the components may be easily performed and that the circuit board provides a stable reference frame for the alignment between the position detection unit and the at least one optical sensor. Furthermore, upon fixing the at least one optical sensor on the circuit board, for instance by soldering, the at least one optical sensor may be automatically aligned on the circuit board.

The circuit board may be oriented essentially parallel to the direction of movement of the locking member and may be received in a circuit board receptacle of the actuator module frame. The circuit board may provide further components and/or input or output lines accessible by plug connectors or plug sockets from outside the actuator module.

In another embodiment of the inventive actuator module, the circuit board further comprises a control unit for providing a signal via the signal output line, the signal corresponding to the position of the locking member. The control unit may be adapted to receive status data of the at least one optical sensor, to process the status data of the at least one optical sensor and to provide an according signal via the signal output line which corresponds to the position of the locking member. The control unit may further comprise a mapping unit, which mapping unit may relate measured status data provided by the at least one optical sensor to predetermined signals, e.g. voltage values, which are subsequently provided via the signal output line.

In another embodiment of the inventive actuator module, the control unit further comprises an alarm signal line for providing an alarm signal if the intermediate signal is provided by the position detection unit via the signal output line for a time period longer than a predetermined switching time period.

The switching time period is to be understood as the time which is generally necessary to move the locking member from the unlocked position to the locked position or vice versa. That is, after the switching time period, a switching cycle from the unlocked position to the locked position or from the locked position to the unlocked position is generally completed. If such a switching cycle is not completed after the switching time period, it may be assumed that an error occurred during the locking or unlocking of the locking member. Such a system fault, error, or malfunction may thus be detected and may generate the alarm signal via the alarm signal line.

In the following, certain embodiments of the inventive actuator module will be presented by way of example of the accompanying figures. The same technical features and technical features providing the same technical effect will be labeled with the same reference numerals.

In the figures:
- Fig. 1: shows the working principle of the inventive actuator module comprising a first embodiment of the trigger member;
- Fig. 2: shows the working principle of the inventive actuator module comprising a second embodiment of the trigger member;
- Fig. 3: shows the actuator module in the unlocked state;
- Fig. 4: shows the actuator module in the locked state;
- Fig. 5: shows a status diagram relating to the state of the actuator module to the states of the optical sensor; and
- Fig. 6: shows an exemplary application of the invention.

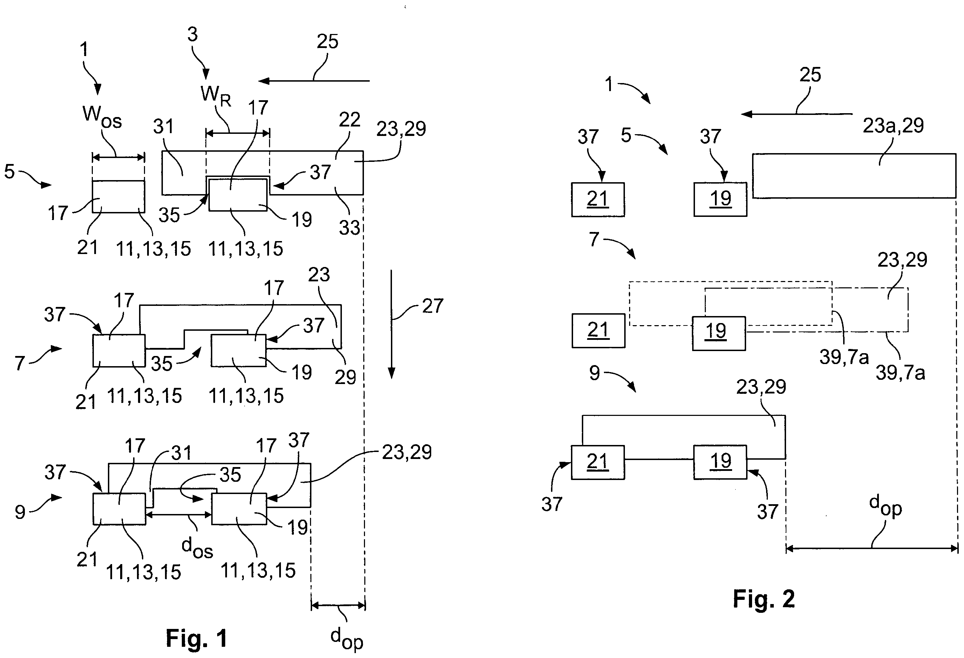

Fig. 1 schematically illustrates the working principle of the inventive actuator module 1. The figure illustrates three states of the actuator module 3, namely an unlocked state 5, an intermediate state 7 and a locked state 9. In this disclosure, the unlocked state 5, intermediate state 7 and locked state 9 will be used as synonyms for the unlocked position 5, the intermediate position 7 and the locked position 9 of the locking member which will be introduced later.

Fig. 1 shows two optical sensors 11 which are embodied as light barriers 13, more specifically as fork light barriers 15, whereas only one fork arm 17 is visible in Fig. 1.

A first fork light barrier 19 is located at a distance dos to a second fork light barrier 21. The distance dos indicates the free space between two optical sensors 11.

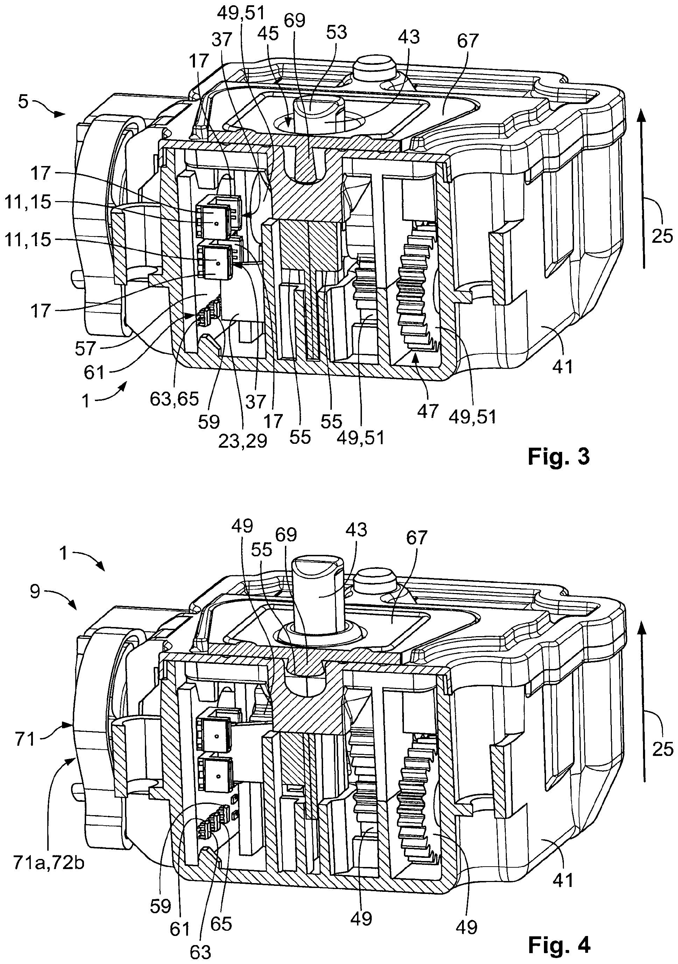

Fig. 1 further shows an object 22 which is embodied as a trigger member 23 which extends along a direction of movement 25. The trigger member 23 is shown as a separate element in the schematic illustration of Figs. 1 and 2 but is, however, actually attached to a locking member (not shown in Figs 1 and 2; see Figs. 3 and 4). The trigger member 23 further extends along a radial direction 27 and has a flat shape 29.

The first embodiment of the trigger member 23 comprises a first flag section 33 and a second flag section 31, which is shown in the unlocked state 5 in Fig. 1.

In between the first flag section 33 and the second flag section 31, the trigger member 23 comprises a recess 35 having a width w_{R} which is larger than a width of an optical sensor wos and smaller than the distance between the optical sensors dos.

In the unlocked state 5, the trigger member 23 is positioned with respect to the optical sensors 11 such that the trigger member 23 is not located in a detection zone 37 of the optical sensors 11. The detection zone 37 is not visible in Fig. 1 or Fig. 2 as it is located behind the fork arm 17 in a direction pointing into the drawing plane.

If the fork light barriers 15 of Figs. 1 and 2 are regarded in the direction of movement 25, their U-shapes would be clearly visible. The U-shape of the fork light barriers 15 would be open in a direction opposite to the radial direction 27. The U-shape of the fork light barriers 15 may be seen in Figs. 3 and 4.

In the unlocked state 5 of the first embodiment of the inventive trigger member 23, the recess 35 of the trigger member 23 essentially receives the detection zone 37 of the first fork light barrier 19.

In the intermediate state 7, the first flag section 33 of the trigger member 23 is moved into the detection zone 37 of the first fork light barrier 19, whose emitted light (not shown) is blocked by the first flag section 33 and does not reach the second fork arm 17 any longer. The second fork arm 17 is located behind the first fork arm 17 (visible in Figs. 1 and 2) in a direction into the drawing plane.

In the intermediate state 7, the second flag section 31 approaches the detection zone 37 of the second fork light barrier 21 but is not yet located within its detection zone 37.

In the locked state 9, the first flag section 33 is moved into the detection zone 37 of the first fork light barrier 19 and the second flag section 31 is moved into the detection zone 37 of the second fork light barrier 21. In the locked state 9, for both fork light barriers 19, 21, the light emitted from the first fork arm 17 is blocked by the first flag section 33 or the second flag section 31.

Fig. 1 furthermore shows an operating distance dₒₚ, which indicates the distance the trigger member 23 is moved from the unlocked position 5 to the locked position 9 or vice versa.

Fig. 2 also shows the working principle of the inventive actuator module 1, whereas in this embodiment a second embodiment of the trigger member 23a is applied.

The second embodiment of the trigger member 23a also has a flat shape 29 but is embodied as a rectangle without a recess 35.

Fig. 2 also shows the unlocked state 5, the intermediate state 7 and the locked state 9, whereas the intermediate state 7 shows two possible positions 39 of the trigger member 23, the possible positions 39 are indicated by a dotted and dotted-dashed surrounding line of the trigger member 23. The dotted circumferential line of the trigger member is slightly displaced for an improved visibility of the two positions 39. The two possible positions 39 of the trigger member 23 in the intermediate state 7 both correspond to the intermediate state which may also be referred to as drive state 7a or fault state 7b.

In Fig. 2, both possible positions 39 of the trigger member 23 in the intermediate state 7 correspond to the drive state 7a.

In the locked state 9, the trigger member 23 is moved along the direction of movement 25 until the trigger member 23 is located in the detection zones 37 of the first fork light barrier 19 and the second fork light barrier 21.

Fig. 2 also shows the operating distance d_{OP} of the second embodiment of the trigger member 23a, which operating distance d_{OP} is larger than the operating distance d_{OP} of the first embodiment of the trigger member 23 shown in Fig. 1.

Fig. 3 shows the inventive actuator module 1 in a perspective side view. The actuator module 1 comprises an actuator housing 41 in which a multitude of components is comprised and received. The locking member 43 (mentioned above) is received in the actuator housing 41 in a housing recess 45.

The locking member 43 is movable along the direction of movement 25 by means of a drive unit 47 which is entirely received in the actuator housing 41. As shown in Fig. 3, the drive unit 47 may comprise several gear members 49 embodied as pinions 51.

The trigger member 23 has a flat shape 29 and is monolithically embodied at the locking member 43. The locking member 43 may further comprise a chamfer 53 for facilitating introduction of the locking member into the locking recess (not shown), stop surfaces 55 for limiting the movement of the locking member 43 opposite to the direction of movement 25 and internal actuation means (not shown) adapted for transforming the rotation of the gear members 49 into a translational movement of the locking member 43 along or opposite the direction of movement 25.

The actuator housing 41 further receives a circuit board 57 on which the optical sensors 11, embodied as fork light barriers 15 are attached. The circuit board 57 may further comprise an attached position detection unit 59, a signal output line 61, a control unit 63 or an alarm signal line 65.

Fig. 3 shows the actuator module 1 in the unlocked state 5, in which the trigger member 23 is located outside the detection zones 37 of the fork light barriers 15. The fork light barriers 15 are soldered to the circuit board 57 and are automatically oriented and aligned by this soldering fabrication step. The two fork light barriers 15 are arranged along the direction of movement 25 one behind the other, wherein the trigger member 23 may move freely between the two fork arms 17 of each of the fork light barriers 15 without mechanically contacting the fork arms 17.

Fig. 4 shows the inventive actuator module 1 in the locked state 9, in which the locking member 43 is moved in the direction of movement 25 and extends from the actuator housing 41.

The movement of the locking member 43 is initiated by the gear members 49 and is damped and stopped by an elastic sealing member 67 which is deformed by a stop surface 55 facing in the direction of movement 25. The elastic sealing member 67 is deformed by this stop surface 55 in a resilient stop region 69 which reversibly deforms upon mechanical contact with the stop surface 55.

The resilient stop region 69 may be monolithically embodied at the elastic sealing member 67.

The inventive actuator module 1 may further comprise connecting means 71 which may be embodied as plug connectors 71a or plug sockets 71b for transmitting the position signal provided by the signal output line 61 or for transmitting the alarm signal provided by the alarm signal line 65.

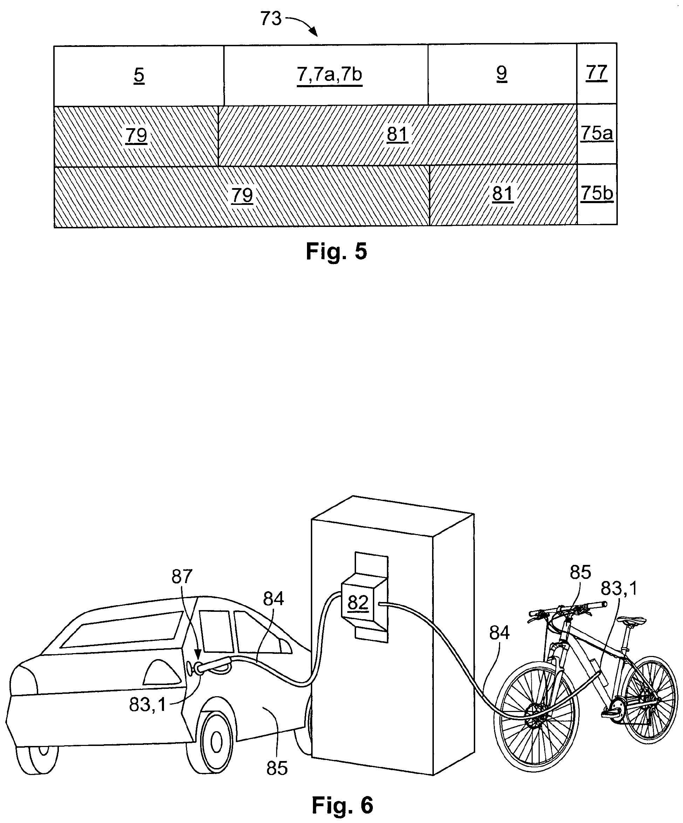

Fig. 5 shows a status diagram 73 of operating an inventive actuator module 1. The status diagram 73 relates the first fork light barrier state 75a and the second fork light barrier state 75b to the actuator module state 77.

In the upper row, the actuator module state 77, namely the unlocked state 5, the intermediate state 7 and the locked state 9 are given, wherein those states 5, 7, 9 depend on the combination of the first fork light barrier state 75a and the second fork light barrier state 75b.

A light fork barrier 15 may show two different states, i.e. an open state 79 and a covered state 81. It is to be noted that the open state may be referred to as off-state and the covered state 81 may be referred to as on-state. The labeling open and covered solely refers to the light emitted by the fork light barrier 15, which light is detected by a light sensitive member of the fork light barrier 15, whereas the light-sensitive member is open in the open state 79 and covered in the covered state 81.

The status diagram 73 indicates that the unlocked state 5 of the actuator module 1 is detected if the first fork light barrier state 75a and the second light barrier state 75b correspond to the open state 79.

The intermediate state 7, the drive state 7a or the fault state 7b is detected as long as the first fork light barrier state 75a corresponds to the covered state 81 and the second fork light barrier state 75b corresponds to the open state.

As indicated above, the intermediate state 7 may be further classified into the drive state 7a or the fault state 7b, wherein the assessment of whether the locking member 43 is still moving or has encountered an error, fault or malfunction, e.g. if the locking member gets stuck, depends on a predetermined switching time period. The predetermined switching time period is a time period corresponding to an approximate duration of the locking member 43 for being moved from the unlocked position 5 to the locked position or vice versa. If the intermediate state 7 is determined for a time period longer than the predetermined switching time period, an error, fault or malfunction of the locking member 43 is probable and the control unit 63 may output an alarm signal via the alarm signal line 65.

The locked state 9 is indicated if the first fork light barrier 75a and the second fork light barrier state 75b each correspond to the covered state 81. In other words, only if the trigger member 23 is located in both fork light barriers 15, more specifically is located in the detection zones 37 of both fork light barriers 15, the locked state 9 is detected.

Fig. 6 shows a common application of the invention. Stationary charging means 82 are connected to two e-mobility vehicles 85 via a charging cable 84 which establishes an electric connection 87 with a corresponding charge inlet 83.

The electric connection 87 is secured by the inventive actuator module 1 located in the charge inlet 83.

### REFERENCE NUMERALS

- 1: actuator module
- 3: state of the actuator module
- 5: unlocked state
- 7: intermediate state
- 7a: drive state
- 7b: fault state
- 9: locked state
- 11: optical sensor
- 13: light barrier
- 15: fork light barrier
- 17: fork arm
- 19: first fork light barrier
- 21: second fork light barrier
- 22: object
- 23: trigger member
- 23a: second embodiment of the trigger member
- 25: direction of movement
- 27: radial direction
- 29: flat shape
- 31: second flag section
- 33: first flag section
- 35: recess
- 37: detection zone
- 39: position of trigger member
- 41: actuator housing
- 43: locking member
- 45: housing recess
- 47: drive unit
- 49: gear member
- 51: pinion
- 53: chamfer
- 55: stop surface
- 57: circuit board
- 59: position detection unit
- 61: signal output line
- 63: control unit
- 65: alarm signal line
- 67: elastic sealing member
- 69: resilient stop region
- 71: connecting means
- 71a: plug connector
- 71b: plug socket
- 73: status diagram
- 75a: first fork light barrier state
- 75b: second fork light barrier state
- 77: actuator module state
- 79: open state
- 81: covered state
- 82: charging means
- 83: charge inlet
- 84: charging cable
- 85: e-mobility vehicle
- 87: electric connection

- d_{OP}: operating distance
- d_{OS}: distance between optical sensors
- W_{R}: width of the recess
- W_{OS}: width of an optical sensor

## Claims

1. Actuator module (1) for locking an electric connection (87), such as a charge inlet (83), in particular of e-mobility vehicles (85), the actuator module (1) comprising a locking member (43) which is movable from an unlocked position (5) to a locked position (9) along a direction of movement (25), a drive unit (47) for moving the locking member (43) from the unlocked to the locked position (9), and a position detection unit (59) for determining the position of the locking member (43), **characterized in that** the position detection unit (59) comprises at least two optical sensors (11) wherein the at least two optical sensors (11) each contain at least one light barrier (13) with a detection zone (37), for detecting an object (22) in the detection zone (37) of the corresponding optical sensor (11), the actuator module (1) further comprising a trigger member (23), the trigger member (23) being located in the detection zones (37) of the at least two optical sensors (11) in one of the unlocked position (5) and the locked position (9) of the locking member (43).

2. Actuator module (1) according to claim 1, wherein the at least two optical sensors (11) are arranged one behind the other along the direction of movement (25) of the locking member (43).

3. Actuator module (1) according to claim 1 or 2, wherein the trigger member (23) is monolithically connected to the locking member (43).

4. Actuator module (1) according to any one of claims 1 to 3, wherein the trigger member (23) extends from the locking member (43) essentially perpendicular to the direction of movement (25) of the locking member (43).

5. Actuator module (1) according to any one of claims 1 to 4, wherein the trigger member (23) has a flat shape (29).

6. Actuator module (1) according to any one of claims 1 to 5, wherein in an intermediate position (7) of the locking member (43), which intermediate position (7) is located between the unlocked position (5) and the locked position (9) of the locking member (43), the trigger member (23) is solely located in one of the detection zones (37) of the at least two optical sensors (11).

7. Actuator module (1) according to any one of claims 1 to 6, wherein the position detection unit (59) comprises a signal output line (61) for providing a position signal, which position signal corresponds to the position of the locking member (43).

8. Actuator module (1) according to claim 7, wherein the position detection unit (59) provides an unlock signal via the signal output line (61) if the locking member (43) is in the unlocked position (5), a lock signal if the locking member (43) is in the locked position (9) and an intermediate signal if the locking member (43) is positioned between the locked position (9) and the unlocked position (5).

9. Actuator module (1) according to any one of claims 1 to 8, wherein the position detection unit (59) and the at least two optical sensors (11) are located on one circuit board (57).

10. Actuator module (1) according to claim 9, wherein the circuit board (57) further comprises a control unit (63) for providing a signal via the signal output line (61), the signal corresponding to the position of the locking member (43).

11. Actuator module (1) according to claim 10, wherein the control unit (63) comprises an alarm signal line (65) for providing an alarm signal if the intermediate signal is provided by the position detection unit (59) via the signal output line for a time period longer than a predetermined switching time period.

12. Charge inlet (83), in particular of an e-mobility vehicle (85) comprising an actuator module (1) according to any one of claims 1 to 11.

## Patentansprüche

1. Aktuatormodul (1) zur Verriegelung einer elektrischen Verbindung (87), etwa eines Ladeeingangs (83), insbesondere von Elektrofahrzeugen (85), wobei das Aktuatormodul (1) aufweist: ein Verriegelungselement (43), das entlang einer Bewegungsrichtung (25) von einer unverriegelten Lage (5) in eine verriegelte Lage (9) bewegbar ist, eine Antriebseinheit (47) zum Bewegen des Verriegelungselements (43) von den unverriegelten in die verriegelte Lage (9), und eine Lageerfassungseinheit (59) zur Bestimmung der Lage des Verriegelungselements (43),
**dadurch gekennzeichnet, dass**
die Lageerfassungseinheit (59) mindestens zwei optische Sensoren (11) aufweist, wobei die mindestens zwei optischen Sensoren (11) jeweils mindestens eine Lichtbarriere (13) mit einer Erfassungszone (37) zum Erfassen eines Objekts (22) in der Erfassungszone (37) des entsprechenden optischen Sensors (11) enthalten, wobei das Aktuatormodul (1) ferner ein Auslöseelement (23) aufweist, und wobei das Auslöseelement (23) in den Erfassungszonen (37) der mindestens zwei optischen Sensoren (11) in der nicht-verriegelten Lage (5) oder der verriegelten Lage (9) des Verriegelungselements (43) angeordnet ist.

2. Aktuatormodul (1) nach Anspruch 1, wobei die mindestens zwei optischen Sensoren (11) entlang der Bewegungsrichtung (25) des Verriegelungselements (43) hintereinander angeordnet sind.

3. Aktuatormodul (1) nach Anspruch 1 oder 2, wobei das Auslöseelement (23) monolithisch mit dem Verriegelungselement (43) verbunden ist.

4. Aktuatormodul (1) nach einem der Ansprüche 1 bis 3, wobei das Auslöseelement (23) sich von dem Verriegelungselement (43) im Wesentlichen senkrecht zur Bewegungsrichtung (25) des Verriegelungselements (43) erstreckt.

5. Aktuatormodul (1) nach einem der Ansprüche 1 bis 4, wobei das Auslöseelement (23) eine flache Form (29) hat.

6. Aktuatormodul (1) nach einem der Ansprüche 1 bis 5, wobei in einer Zwischenlage (7) des Verriegelungselements (43) das Auslöseelement (23) nur in einer der Erfassungszonen (37) der mindestens zwei optischen Sensoren (11) angeordnet ist, wobei die Zwischenlage (7) zwischen der unverriegelten Lage (5) und der verriegelten Lage (9) des Verriegelungselements (43) liegt.

7. Aktuatormodul (1) nach einem der Ansprüche 1 bis 6, wobei die Lageerfassungseinheit (59) eine Signalausgangsleitung (61) zur Bereitstellung eines Lagesignals aufweist, wobei das Lagesignal der Lage des Verriegelungselements (43) entspricht.

8. Aktuatormodul (1) nach Anspruch 7, wobei die Lageerfassungseinheit (59) ein Unverriegelungssignal über die Signalausgangsleitung (61) bereitstellt, wenn das Verriegelungselement (43) in der unverriegelten Lage (5) ist, ein Verriegelungssignal bereitstellt, wenn das Verriegelungselement (43) in der verriegelten Lage (9) ist, und ein Zwischensignal bereitstellt, wenn das Verriegelungselement (43) zwischen der verriegelten Lage (9) und der unverriegelten Lage (5) ist.

9. Aktuatormodul (1) nach einem der Ansprüche 1 bis 8, wobei die Lageerfassungseinheit (59) und die mindestens zwei optischen Sensoren (11) auf einer einzelnen Leiterplatte (57) angeordnet sind.

10. Aktuatormodul (1) nach Anspruch 9, wobei die Leiterplatte (57) ferner eine Steuereinheit (63) zur Bereitstellung eines Signals über die Signalausgangsleitung (61) aufweist, wobei das Signal der Lage des Verriegelungselements (43) entspricht.

11. Aktuatormodul (1) nach Anspruch 10, wobei die Steuereinheit (63) eine Alarmsignalleitung (65) zur Bereitstellung eines Alarmsignals aufweist, wenn das Zwischensignal durch die Lageerfassungseinheit (59) über die Signalausgangsleitung für eine Zeitdauer bereitgestellt wird, die länger ist als eine vorbestimmte Schaltzeitdauer.

12. Ladeeingang (83), insbesondere eines Elektrofahrzeugs (85), mit einem Aktuatormodul (1) nach einem der Ansprüche 1 bis 11.

## Revendications

1. Module actionneur (1) pour verrouiller une connexion électrique (87), telle qu'une entrée de charge (83), en particulier de véhicules de mobilité électrique (85), le module actionneur (1) comprenant un élément de verrouillage (43) qui est mobile d'une position déverrouillée (5) à une position verrouillée (9) selon une direction de déplacement (25), une unité d'entraînement (47) pour déplacer l'élément de verrouillage (43) de la position déverrouillée à la position verrouillée (9), et une unité de détection de position (59) pour déterminer la position de l'élément de verrouillage (43), **caractérisé en ce que** l'unité de détection de position (59) comprend au moins deux capteurs optiques (11), dans lequel lesdits au moins deux capteurs optiques (11) contiennent chacun au moins une barrière lumineuse (13) avec une zone de détection (37) pour détecter un objet (22) dans la zone de détection (37) du capteur optique correspondant (11), le module actionneur (1) comprenant en outre un élément déclencheur (23), l'élément déclencheur (23) se trouvant dans les zones de détection (37) desdits au moins deux capteurs optiques (11) dans une position parmi la position déverrouillée (5) et la position verrouillée (9) de l'élément de verrouillage (43).

2. Module actionneur (1) selon la revendication 1, dans lequel lesdits au moins deux capteurs optiques (11) sont agencés l'un derrière l'autre selon la direction de déplacement (25) de l'élément de verrouillage (43).

3. Module actionneur (1) selon la revendication 1 ou 2, dans lequel l'élément déclencheur (23) est connecté de manière monolithique à l'élément de verrouillage (43).

4. Module actionneur (1) selon l'une quelconque des revendications 1 à 3, dans lequel l'élément déclencheur (23) s'étend depuis l'élément de verrouillage (43) de manière essentiellement perpendiculaire à la direction de déplacement (25) de l'élément de verrouillage (43).

5. Module actionneur (1) selon l'une quelconque des revendications 1 à 4, dans lequel l'élément déclencheur (23) présente une forme plane (29).

6. Module actionneur (1) selon l'une quelconque des revendications 1 à 5 dans lequel, dans une position intermédiaire (7) de l'élément de verrouillage (43), ladite position intermédiaire (7) se trouvant entre la position déverrouillée (5) et la position verrouillée (9) de l'élément de verrouillage (43), l'élément déclencheur (23) se trouve uniquement dans l'une des zones de détection (37) desdits au moins deux capteurs optiques (11).

7. Module actionneur (1) selon l'une quelconque des revendications 1 à 6, dans lequel l'unité de détection de position (59) comprend une ligne de sortie de signal (61) pour fournir un signal de position, ledit signal de position correspondant à la position de l'élément de verrouillage (43).

8. Module actionneur (1) selon la revendication 7, dans lequel l'unité de détection de position (59) fournit un signal de déverrouillage via la ligne de sortie de signal (61) si l'élément de verrouillage (43) est en position déverrouillée (5), un signal de verrouillage si l'élément de verrouillage (43) est en position verrouillée (9), et un signal intermédiaire si l'élément de verrouillage (43) est positionné entre la position verrouillée (9) et la position déverrouillée (5).

9. Module actionneur (1) selon l'une quelconque des revendications 1 à 8, dans lequel l'unité de détection de position (59) et lesdits au moins deux capteurs optiques (11) se trouvent sur un circuit imprimé (57).

10. Module actionneur (1) selon la revendication 9, dans lequel le circuit imprimé (57) comprend en outre une unité de contrôle (63) pour fournir un signal via la ligne de sortie de signal (61), le signal correspondant à la position de l'élément de verrouillage (43).

11. Module actionneur (1) selon la revendication 10, dans lequel l'unité de contrôle (63) comprend une ligne de signal d'alarme (65) pour fournir un signal d'alarme si le signal intermédiaire est pourvu par l'unité de détection de position (59) via la ligne de sortie de signal sur une période plus longue qu'une période de commutation prédéterminée.

12. Entrée de charge (83), en particulier d'un véhicule de mobilité électrique (85) comprenant un module actionneur (1) selon l'une quelconque des revendications 1 à 11.
